Europäisches Patentamt

European Patent Office

Office européen des brevets

(19)

(11) **EP 1 044 246 B1**

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(51) Int Cl.⁷: **C09K 3/10**, E04B 1/66, C08L 21/00

(21) Anmeldenummer: **99901591.0**

(22) Anmeldetag: **08.01.1999**

(86) Internationale Anmeldenummer:
**PCT/EP99/00075**

(87) Internationale Veröffentlichungsnummer:
**WO 99/35208 (15.07.1999 Gazette 1999/28)**

(54) **WASSERQUELLENDES DICHTUNGSMATERIAL**

SEALING MATERIAL WHICH SWELLS WHEN TREATED WITH WATER

MATERIAU D'ETANCHEITE GONFLANT SOUS L'EFFET DE L'EAU

(84) Benannte Vertragsstaaten:
**AT BE CH DE ES FR GB IT LI NL**

(30) Priorität: **09.01.1998 DE 19800489**

(43) Veröffentlichungstag der Anmeldung:
**18.10.2000 Patentblatt 2000/42**

(73) Patentinhaber:
• **Dätwyler AG Gummi- und Kunststoffe**
 **6467 Schattdorf (CH)**
• **Mang, Thomas**
 **82377 Penzberg (DE)**

(72) Erfinder:
• **MANG, Thomas**
 **D-82377 Penzberg (DE)**
• **DAHM, Jürgen**
 **CH-6467 Schattdorf (CH)**

• **PREISSER, Günter**
 **CH-6467 Schattdorf (CH)**

(74) Vertreter:
**Sternagel, Fleischer, Godemeyer & Partner**
**Patentanwälte**
**Braunsberger Feld 29**
**51429 Bergisch Gladbach (DE)**

(56) Entgegenhaltungen:
**EP-A- 0 160 438        EP-A- 0 179 937**
**DE-A- 3 532 961        DE-A- 3 610 645**
**DE-A- 4 224 044        US-A- 5 011 875**

• **DATABASE WPI Section Ch, Week 9427 Derwent Publications Ltd., London, GB; Class A18, AN 94-222123 XP002101419 & JP 06 157839 A (TONEN KAGAKU KK) , 7. Juni 1994**

**Beschreibung**

Technisches Gebiet der Erfindung

Die vorliegende Erfindung richtet sich auf mit Wasser quellbare Dichtungszusammensetzungen zur Herstellung von vorgeformten Dichtungen für den Hoch-, Tief- und Ingenieurbau, insbesondere zur Fugenabdichtung und zum Ausgleich von Dimensionsänderungen von Bauteilen. Die Dichtungszusammensetzungen enthalten Elastomere und in deren Matrix eingebettet eine Kombination von stark Wasser aufnehmenden Materialien wie Polysaccharide und hydrophile Polymere, die als sogenannte Superabsorber bekannt sind.

Stand der Technik

Wasserquellende Dichtungszusammensetzungen sind seit langem bekannt.

In der DE-A-42 26 198 wird ein bei Kontakt mit Wasser quellbares Dichtungsmaterial, besonders zur Fugenabdichtung oder zum Ausgleich von Dimensionsänderungen im Hoch-, Tief- und Ingenieurbau oder in anderen technischen Bereichen, beschrieben. Das Dichtungsmaterial ist durch Polymerisation aus einem Reaktionsgemisch von monomeren, wasserlöslichen oder wassermischbaren Acryl- und/oder Methacrylsäuren und/oder Derivaten dieser Säuren herstellbar. Die beschriebenen Abdichtmaterialien haben den Nachteil, daß toxische Rohstoffe zum Einsatz kommen, die auch nach dem Aushärten des Bandes zum Teil im Abdichtmaterial verbleiben und die Umwelt belasten.

Aus DE-A-36 10 645 ist ein wasserquellendes Dichtungsmittel bekannt, das als polymeres Grundmaterial kein hydrophobes Polymer wie Kautschuk enthält, sondern ein hydrophiles Additionsprodukt eines niedermolekularen Polyolefinpolyols und Ethylenoxid, d. das reaktionsfähige Hydroxylgruppen enthält. Als wasserabsorbierende Polymere sind in der Zusammensetzung enthalten verseifte PVA-Natriumacrylat-Copolymere, CMC, hydrolisierte Polyacrylsäuren, Mischungen aus Stärke und hydrolisierten Polyacrylnitrilen oder Mischungen aus Stärke und Natriumpolyacrylaten. Die Vernetzung erfolgt mittels Isocyanat.

In DE-A-35 32 961 ist ein Dichtungsmaterial beschrieben, das als wasserquellendes Material eine Mischung von wasserabsorbierendem Polymer und Kautschuk oder Kunstharz enthält. Als wasserabsorbierende Polymere sind genannt: CMC, Stärke-Polyacrylnitrilhydrolysat, Stärke-Polyacrylat, Natriumpolyacrylathydrolysat. Das wasserquellende Material kann aufgeschäumt sein, so daß dessen spezifische Dichte 0,1 bis 0,9 g/cm$^3$ beträgt.

In EP-A-160 438 ist ein wasserquellendes Dichtungsmaterial beschrieben, das einen Körper aus wasserquellendem Polymermaterial und nicht wasserquellendem Material aufweist, der von einer Schicht umgeben ist, die gegenüber Wasser mit neutralem pH-Wert undurchlässig, jedoch für Wasser im alkalischen Bereich durchlässig ist. Der Körper enthält ein wasserunlösliches gummiartiges Polymer und ein stark wasseraufnehmendes Harz, z.B. vernetzte Polyacrylsäuresalze, Reaktionsprodukte von Stärke und Polyacrylsäure.

US-A-5,011,875 richtet sich auf wasserquellendes Dichtungszusammensetzungen aus Kautschuk, thermoplastischen Polymeren und wasserabsorbierendem Material, wie Polymeren auf Basis von Acrylsäure, Stärke-Polyacrylsäurepfropfcopolymere, Stärke-Polyacrylnitrilpfropfcopolymere, CMC.

Aus US-A-5,075,373 ist ein wasserquellendes Dichtungsmaterial bekannt, das in einer Matrix aus Kautschuk oder synthetischen Elastomeren eingelagerte Teilchen eines wasseraufnehmenden Harzes aufweist, wie zum Beispiel vernetzte Polyacrylsäuresalze, Stärke-Acrylsäure-Pfropfcopolymere, Stärke-Ethylacrylat-Pfropfcopolymere, CMC.

EP-A-118 998 richtet sich auf eine wasserquellende Dichtung aus Chloroprenkautschuk in Mischung mit hydrophilen, wasserabsorbierenden Polymeren wie Stärke-Polyacrylat-Pfropfcopolymere, Polyacrylate, Poly(meth)acrylsäuresalzen, Maleinsäureanhydridcopolymeren.

Aus EP-A-055 848 ist eine wasserabsorbierende Kautschukmischung bekannt aus einem 1,3-Dienkautschuk und einem darin dispergierten Harz mit hoher Wasseraufnahme, z.B. Maleinsäureanhydrid-Copolymeren, vernetzten Alkalisalzen von Polyacrylsäure.

In EP-A-410 669 ist eine wasserquellbare Dichtungszusammensetzung beschrieben aus einer vulkanisierten Gummimasse, einem stark wasseraufnehmenden Harz, wie auf Poly(acrylsäure) basierenden Harzen, Maleinsäureanhydridcopolymeren, basischem wasserabsorbierenden anorganischen Material, Weichmacher, Vulkanisationsmittel und üblichen Hilfsstoffen.

Aus DE-A-196 19 709 ist ein Dichtungsmaterial bekannt, das auf einem Metallblech einen Überzug aus einem superabsorbierenden Polymer, Fasern und Kautschuk aufweist.

Aus JP-A-6-157839 ist eine wasserquellbare Dichtungszusammensetzung bekannt, die eine unvulkanisierte Harzkomponente enthält bestehend aus einem bestimmten nicht vernetzten thermoplastischen olefinischen Elastomer und einem hydrierten Dien-Copolymer und in der Zusammensetzung ein wasseraufsaugendes Harz und ggfs. Cellulosefasern vorhanden sind.

Die bekannten Dichtungsmaterialien haben jedoch Nachteile, insbesondere bei Verwendung in Verbunddichtungen. Anorganische Zuschlagstoffe führen bei der Herstellung und Verarbeitung der Dichtungen zu starker Maschinenabnutzung. Beim Austrocknen geht häufig die erforderliche Dehnfähigkeit und Elastizität verloren. Die meisten Dichtungsmaterialien besitzen eine relativ hohe spezifische Dichte (>1 g/cm$^3$) und die Elastizität ist eingeschränkt. Ferner enthalten sie häufig toxische Bestandteile.

Aufgabe der Erfindung

Aufgabe der vorliegenden Erfindung ist es, ein mit Wasser quellbares Dichtungsmaterial für vorgeformte Dichtungen zur Verfügung zu stellen, das vornehmlich aus untoxischen Rohstoffen hergestellt wird und sich gut zu vorgeformten Dichtungen, auch zu Verbunddichtungen verarbeiten läßt. Ferner sollen bei der Herstellung der Dichtungen Maschinenprobleme, wie Abrasion, vermieden werden. Das Quellvermögen soll an die spezifischen Erfordernisse im Hoch-, Tief- und Ingenieurbau anpaßbar sein.

Beschreibung der Erfindung

Die Aufgabe wird gelöst durch wasserquellende Dichtungszusammensetzungen für vorgeformte Dichtungen mit einer Matrix aus Elastomerkomponente*(n)* und darin eingelagertem teilchenförmigen wasseraufnehmenden Material, dadurch gekennzeichnet, daß das wasseraufnehmende Material eine Kombination von (A) (Polysaccharid(en), ausgewählt aus, mikrokristalliner oder amorpher Cellulose, Stärke, Stärkederivaten ausgenommen gepfropfter Stärke, Amylose, Amylopektin, Dextrane, Pektine, Inulin, Chitin, Xanthan, Alginsäure, Alginaten, Caragenaan, Pustulan, Callose, Laminarin, Guluronsäure, Pullulan, Lichenin oder Mischungen derselben mit (B) für Wasser hochsaugaktivem synthetischen Polymer, ausgewählt aus Polymeren auf (Meth)acrylatbasis, Poly(meth)acrylsäure und deren Salzen, Polyacrylamid. Polyalkoholen oder Copolymeren der genannten synthetischen Polymeren ist und die Dichtungszusammensetzung mittels eines Treibmittels und Erwärmen auf 100°C oder höher aufgeschäumt und die Elastomerkomponente(n) vernetzt ist (sind).
Es können auch Mischungen von für Wasser hochsaugaktiven synthetischen Polymeren verwendet werden.
Die bei Einwirkung von Wasser quellenden Dichtungszusammensetzungen enthalten, bezogen auf 100 Gew. Tl. Elastomerkomponente(n). 6,67 Gew.Tl. bis 600 Gew.Tl. Polysaccharid(e) und 2,67 Gew.Tl. bis 100 Gew.Tl. für Wasser hochsaugaktiven synthetischen Polymer(e).
Die erfindungsgemäßen Dichtungszusammensetzungen enthalten ein Treibmittel, und sind durch Erwärmen auf 100°C oder höher aufgeschäumt.
Nach dem Vulkanisieren oder Vernetzen von Kautschuk(en) zu Elastomer(en) als Elastomerkomponente(n) weisen die erfindungsgemäßen Dichtungszusammensetzungen bei Einwirkung von Wasser für 3 bis 7 Tage eine Volumenzunahme von 5-600 Vol.% auf.
Besonders bevorzugt ist es, durch entsprechende Wahl von Typ und Anteil an Polysaccharid und hochsaugfähigen synthetischen Polymeren, des Porengehaltes, der Vernetzung, der Härte von Kautschuk und Elastomeren das Quellvermögen einzustellen, insbesondere geringer quellende vorgeformte Dichtungen mit Volumenzunahme von 5-30 Vol.% besonders bevorzugt mit Volumenzunahme von 10-20 Vol.%, auszubilden und/oder stark quellende vorgeformte Dichtungen mit Volumenzunahme von über 50 Vol.% bis 500 Vol.% auszubilden.
Die vorgeformten Dichtungen/Verbunddichtungen können als Bänder, Rundschnüre, endlose Profile mit unterschiedlichsten Querschnitten ausgebildet werden.
Die erfindungsgemäßen Dichtungen/Verbunddichtungen können zum Abdichten von Bauwerken im Hoch-, Tief- oder Tunnelbau, im industriellen Bauwesen, aber auch bei weiteren Anwendungsfällen, die wasserquellende Dichtungen erfordern, verwendet werden.
Die Lösung der Aufgabe schließt auch ein Verfahren zum Herstellen von vorgeformten, unter Einwirkung von Wasser quellenden Dichtungen aus den erfindungsgemäßen Dichtungszusammensetzungen mit einer Matrix aus Elastomerkomponente(n) und darin eingelagertem teilchenförmigen wasseraufnehmenden Material ein, durch Mischen der Bestandteile auf einem Mischwalzwerk, in einem Innenmischer oder Extruder und anschließendes Ausformen und Aufschäumen und Vernetzen der Elastomerkomponente(n), so daß die Volumenzunahme bei Einwirkung von Wasser für 3-7 Tage 5-600 Vol.% beträgt.

Detaillierte Beschreibung der Erfindung

Die erfindungsgemäße Dichtungszusammensetzung enthält in der Regel noch ein oder mehrere übliche Zusätze, wie beispielsweise Gleitmittel, Alterungsschutzmittel, Farbstoffe, Füllstoffe, Treibmittel, Weichmacher, Vernetzungsmittel für Kautschuk, Vernetzungsbeschleuniger, Aktivatoren. Verzögerer, Vernetzungsmittel für Elastomere.
Als Füllstoffe können insbesondere verwendet werden gefällte und/oder pyrogene Kieselsäure, Silicate, Sand, Mineralmehl wie Quarz, Talkum, Glimmer, Kreide, Kaolin, Leichtspat, Kalk, Dolomit, Basalt, Kieselgur, Baryt, Feldspat. Ruße, polymere Hohlkugelpigmente, Holzmehl. Gummimehlstaub.

Als Weichmacher können Mineralöl paraffinischer, naphthenischer oder aromatischer Natur, Esterweichmacher wie Dioctylphthalat, auf Adipaten, Sebacaten basierende Esterweichmacher, Phosphorsäureester, Stearinsäure, Palmitinsäure, Rizinusöl, Baumwollsaatöl, Rapsöl, aber auch polymere Weichmacher wie beispielsweise niedermolekulare Kautschuke.

Geeignete Vernetzungsmittel oder Vulkanisationsmittel für Kautschuk und Vernetzungsmittel für Elastomere sind die dafür üblichen, z.B. Schwefel, Schwefelverbindungen, Peroxide und dergleichen.

Grundsätzlich ist es auch möglich, die Vernetzung durch Elektronenstrahlen, vorzunehmen.
Es werden für die Vernetzung oder Vulkanisation die in der Praxis üblichen Arbeitsweisen verwendet.

Die Elastomerkomponente(n), die in der fertigen Dichtungszusammensetzung in vulkanisierter bzw. vernetzter Form vorliegt *(vorliegen),* wird ausgewählt aus Naturkautschuk (NR), cis-1,4-Polyisoprenkautschuk (IR), Polybutadien (BR), statistisch copolymerisierte Styrol-Dienkautschuke (SBR oder SIR), Acrylatkautschuk, Acrylnitril-Dienkautschuke (NBR oder NIR), Polychloropren (CR), Ethylen-Propylenkautschuk (EPR), Isobutylen-Isoprenkautschuke (IIR), Ethylen-Propylen-Dienkautschuk (EPDM), Epichlorhydrinkautschuk. Siliconkautschuk, Polysulfidkautschuk, Polyurethanen, thermoplastischen Elastomeren.

Es können auch Mischungen von Elastomeren verwendet werden.
Die Elastomerkomponente(n) gibt (geben) dem Dichtungsmaterial vor allem die guten mechanischen Eigenschaften, wie hohe Elastizität und Dehnbarkeit.

Die, wie bereits beschrieben, ausgewählten sehr hydrophilen Polysaccharide nehmen bei Wasserkontakt Wasser auf und sorgen für Wassertransport in die Dichtungszusammensetzung und wirken auch quellend.

Nicht in Wasser lösliche, jedoch wasserquellende mikrokristalline oder amorphe Cellulose zur Verwendung in den erfindungsgemäßen Dichtungszusammensetzungen haben üblicherweise mittlere Teilchengrößen zwischen 30 μm und 200 μm, im Falle von aufgranulierten Typen liegt die mittlere Teilchengröße zwischen 350 μm und 800 μ m. Die feinteilige Cellulose weist vorzugsweise Schüttgewichte von 40 g/l bis 300 g/l, ganz besonders bevorzugt von 65 g/l bis 170 g/l auf. Werden bereits aufgranulierte Typen verwendet, liegt deren Schüttgewicht höher und kann von 350 g/l bis 550 g/l betragen.

Stärke/Stärkederivate können verschiedener Herkunft sein, beispielsweise Stärke von Reis, Mais, Weizen, Kartoffeln und Leguminosen. Es können auch die entsprechenden Mehle mit cellulosischen Pflanzenbestandteilen verwendet werden. Bevorzugt sind kaltquellende Stärken.

Polygalaktomanane, wie beispielsweise Guar oder Johannisbrotkernmehl, weisen diese Eigenschaft bereits im nativen Zustand auf und können direkt oder nach geringfügiger Modifizierung eingesetzt werden.
Von Natur aus nicht kaltwasserquellende Stärken werden bevorzugt in Form ihrer Derivate verwendet. Chemisch derivatisierte Stärken enthalten vorzugsweise Substituenten, die durch Ester- oder Ethergruppen in ausreichender Zahl an die Polysaccharidketten angeknüpft sind, um die Kaltwasserquellbarkeit zu vermitteln.
Stärken, die mit ionischen Substituenten, wie Phosphatgruppen, modifiziert sind, haben sich als besonders vorteilhaft erwiesen und sind deshalb bevorzugt. Des weiteren können kaltwasserquellende Stärken vom Typ der abgebauten Stärken verwendet werden, beispielsweise Säure-. Enzym-und oxidativ abgebaute Stärken bzw. dextrinierte Stärken. Oftmals ist es für das Quellvermögen von Vorteil, wenn die Stärkederivate durch eine Kombination von Abbau und chemischer Substitution modifiziert werden.
Zur Verbesserung des Quellverhaltens hat sich auch die Verwendung von leicht anvernetzten Stärken bewährt. Auch alkalisch behandelte Stärken können wegen ihrer Kaltwasserlöslichkeit verwendet werden.
Eine weitere Gruppe der erfindungsgemäß einsetzbaren kaltwasserquellbaren Stärken sind die nativen Stärken, die durch eine physikalische Behandlung die Kaltquellbarkeit erlangt haben. Dazu zählen beispielsweise Extruderstärken und Walzentrocknerstärken.

Zur Verstärkung der Wasseraufnahme und besonders der damit einhergehenden Volumenzunahme wird in den Dichtungszusammensetzungen ein synthetisches Polymer in Form von stark quellendem Granulat oder Pulver mitverwendet. Als besonders geeignet haben sich lineare Polymere von (Meth)acrylsäure, Copolymere von (Meth)acrylsäure oder Salze derselben mit gewichtsmittleren Molekulargewichten von 5.000 bis 70.000 und quervernetzte Polymere von (Meth)acrylsäure, Copolymere von (Meth)acrylsäure oder Salze derselben mit gewichtsmittleren Molekulargewichten von 1.000.000 bis 5.000.000 erwiesen. Bei den Copolymeren handelt es sich vorzugsweise um Copolymere von (Meth)acrylsäure und Maleinsäure oder Maleinsäureanhydrid, die beispielsweise 40 bis 90 Gew.% (Meth)acrylsäure und 60 bis 10 Gew.% Maleinsäure oder Maleinsäureanhydrid. deren relative Molmasse, bezogen auf freie Säuren, zwischen 3.000 und 100.000, vorzugsweise 3.000 bis 70.000 und ganz besonders bevorzugt 5.000 bis 50.000 beträgt.
Als gut geeignet haben sich auch ter- und quattropolymere Polycarboxylate erwiesen, hergestellt aus (Heth)acrylsäure, Maleinsäure und Vinylalkohol oder Vinylalkoholderivaten, oder solche aus (Meth)acrylsäure, ethylenisch ungesättigten Sulfonsäuren und Zuckerderivaten, oder solche aus (Meth)acrylsäure, Maleinsäure, Vinylalkoholderivaten und sulfonsäuregruppenhaltigen Monomeren.
Insbesondere bevorzugt sind auch ter- und quattropolymere Polycarboxylate, hergestellt aus (Meth)acrylsäure, Maleinsäure und Vinylalkohol oder Vinylalkoholderivaten (wie sie in DE-A-43 00 772 beschrieben sind) oder solche aus (Meth)acrylsäure, 2-Alkylallylsulfonsäure und Zuckerderivaten (wie in DE-A-42 21 381 beschrieben) oder solche aus (Meth)acrylsäure, Maleinsäure, Vinylalkoholderivaten und Monomeren mit Sulfonsäuregruppen (beschrieben in DE-A-19 516 957).

Diese synthetischen Polymeren oder "Superabsorber" können als vernetzte Polymere ein Vielfaches ihres Eigengewichtes an Wasser unter Bildung von Hydrogelen aufnehmen und binden und so auch bei kleineren Beimengungen zu einer starken Volumenzunahme der Abdichtmaterialien infolge Wasserquellung führen.

Die erfindungsgemäß zu verwendenden Superabsorber können beispielsweise bis zu 600 g Wasser pro Gramm Superabsorber binden, teilweise sogar bis zu 900 g Wasser/g Superabsorber.

Besonders bevorzugt sind Superabsorber, die innerhalb von 50 Sekunden 75 g bis 200 g Wasser pro Gramm Superabsorber aufnehmen können.

Vorzugsweise weisen die für Wasser hochsaugaktive Polymeren eine mittlere Korngröße im Bereich von 5 µm bis 800 µm auf.

Bevorzugt sind jedoch Produkte mit einer mittleren Teilchengröße unter 400 µm. Je nach Anforderungen können aber auch Produkte mit einer mittleren Teilchengröße von 400-800 µm verwendet werden.

Es ist bevorzugt, möglichst feine Superabsorberpartikel einzusetzen. So platzen oder quellen Superabsorberpartikel mit einer mittleren Teilchengröße von 70 bis 150 µm nicht mehr aus der Elastomermatrix heraus, während größere Partikel von 100 bis 800 µm beim erstmaligen Quellen zum Teil herausplatzen können und bei erneutem Quellen die Quellung heruntersetzen. Bei Verwendung von grobkörnigeren Superabsorbern (100-800 µm) betragen die mit Wasser auswaschbaren Bestandteile ca. 3,5 Gew.%, während bei Verwendung von feinteiligeren Superabsorbern der auswaschbare Anteil nur 2-3 Gew.% beträgt.

Als besonders geeignet haben sich Superabsorber erwiesen, deren mittlere Korngrößenverteilung die folgende ist.

| Korngröße in µm | Durchschnitt in % | Durchschitt in % | Durchschnitt in % |
|---|---|---|---|
| | Korngrößenverteilung in % Muster 1 | Korngrößenverteilung in % Muster 2 | Korngrößenverteilung in % Muster 3 |
| | | | |
| >800 | 1,3 | 0 | 0 |
| 800-560 | 30,9 | 0 | 0 |
| 560-400 | 30,8 | 0 | 0 |
| 400-250 | 19,7 | 0 | 0 |
| 250-200 | 8,0 | 2.2 | 0 |
| 200-160 | 3.1 | 9,6 | 0 |
| 160-100 | 4,0 | 44,6 | 59,1 |
| 100-50 | 0,2 | 29,3 | 37,7 |
| <50 | 0 | 10,5 | 2,3 |
| Muster 1:Favor SAB 954, Muster 2:Favor CA 100 Feinstkorn, Muster 3:Cabloc C96 | | | |

Die Korngrößenverteilung wurde wie folgend ermittelt:

Es wurde von jedem Quellmedium 10,00 9 auf der Analysenwaage abgewogen und auf den Siebturm gegeben. Siebgröße: 800; 560; 400; 250; 200: 160; 100 und 50 µm. Nun wurde für ca. 5 Min. bei mittlerer Stärke geschüttelt. Danach wurde das Produkt, durch gutes Ausklopfen der einzelnen Siebe, wieder auf der Analysenwaage zurückgewogen. Es wurde bei jedem Produkt eine Dreifach-Bestimmung durchgeführt.

Die Mengen an Polysaccharid(en) A und synthetischem Polymer (B), bezogen auf 100 Gew.Tl. Elastomerkomponente(n), liegen im Bereich von 6,67 Gew.Tl. bis 600 Gew. Tl. Polysaccharid(e) und 2,67 Gew.Tl. bis 100 Gew. Tl. synthetisches Polymer (B).

Bevorzugt sind 12,5 Gew.Tl. bis 553,33 Gew.Tl., ganz besonders bevorzugt 33.33 Gew.Tl. bis 100 Gew.Tl., Polysaccharid(e) pro 100 Gew.Tl.

Elastomerkomponente in den erfindungsgemäßen Dichtungszusammensetzungen enthalten.

Bei dem für Wasser hochsaugaktiven Polymer betragen die bevorzugten Mengen 12,5 Gew.Tl. bis 37,5 Gew. Tl. pro 100 Gew.Tl.

Elastomerkomponente.

Die Elastomerkomponente(n) wird (werden) ausgewählt aus vulkanisiertem Naturkautschuk (NR), vulkanisiertem cis-1,4-Polyisoprenkautschuk (IR), vulkanisiertem Polybutadien (BR), vulkanisiertem statistisch copolymerisierte Styrol-Dienkautschuke (SBR oder SIR), vulkanisiertem Acrylatkautschuk, vulkanisierten Acrylnitril-Dienkautschuken (NBR oder NIR), vulkanisiertem Polychloropren (CR), vulkanisiertem Ethylen-Propylenkautschuk (EPR). vulkanisierten Isobutylen-Isoprenkautschuken (IIR), vulkanisiertem Ethylen-Propylen-Dienkautschuk (EPDM), vulkanisiertem Epichlorhydrinkautschuk, vulkanisiertem Siliconkautschuk, vulkanisiertem Polysulfidkautschuk, vernetzten Polyurethanen, vernetzten thermoplastische Elastomere

Die üblichen Hilfsstoffe können in der erfindungsgemäßen Dichtungszusammensetzung, bezogen auf 100 Gew.Tl. Elastomerkomponente(n), in folgenden Mengen vorhanden sein:

| Füllstoffe | 533-0 | Gew. Teile |
|---|---|---|
| Gleitmittel | 114,3-0 | Gew.Teile |
| Alterungsschutzmittel | 15,4-0 | Gew.Teile |
| Farbstoffe | 15,4-0 | Gew.Teile |
| Aktivatoren/Beschleuniger | 15,4-0 | Gew.Teile |
| Vernetzungsmittel | 15,4-0 | Gew.Teile |
| Treibmittel | 66,7-0 | Gew.Teile |
| Weichmacher | 114,3-0 | Gew. Teile |

Bei Verwendung des erfindungsgemäßen mit Wasser quellbaren Dichtungsmaterials in an sich bekannten Abdichtungssystemen paßt sich die Abdichtung der eingebrachten Grundform, besonders den Fugenformen, aufgrund des hohen Quellvermögens sehr schnell an. Der Durchtritt von Wasser wird dadurch sicher, meist schon in einem früheren Stadium des Schadens, verhindert. Wird das Dichtungsmaterial als Fugenprofil eingesetzt, paßt sich dieses Profil Volumenänderungen, beispielsweise des Baukörpers, durch Quellung bei Wasserkontakt an. Entstehende Setzrisse im Bereich des Fugenprofils heilen durch die schnelle, starke und kontrollierte Quellung selbständig.

Die erfindungsgemäßen Dichtungsmaterialien weisen gegenüber bekannten Dichtungsmaterialien aus Bentonit und Kautschuk eine deutlich verbesserte Verarbeitbarkeit auf, da hier keine Abrasionsprobleme auftreten. Ferner werden aus dem erfindungsgemäßen Dichtungsmaterial fast keine Stoffe mehr mit Wasser herauseluiert: Die herauseluierten Bestandteile liegen bei maximal 2%, bezogen auf die ursprüngliche Bandmasse. Ferner wird das erfindungsgemäße Dichtungsmaterial gegenüber Dichtungsmaterialien aus Acrylaten/Methacrylaten oder Isocyanaten aus untoxischen Hauptbestandteilen hergestellt. Durch die geringere Dichte der aufgeschäumten erfindungsgemäßen Dichtungsmaterilien ist der Rohstoffeinsatz erheblich reduziert und eine erhebliche Verbilligung des Abdichtmaterials erreicht.

Gegenüber wasserquellbaren Acrylat-Abdichtmaterialien, die beim Eintrocknen infolge des Verlustes an Weichmacherwirkung verhärten, verhärtet das erfindungsgemäße Dichtungsmaterial beim Trocknen nicht wesentlich.

Besonders vorteilhaft ist es, die erfindungsgemäße Zusammensetzung unter Verringerung der spezifischen Dichte aufzuschäumen. Dies erfolgt durch die für das Aufschäumen von Elastomeren an sich bekannten Maßnahmen. Als Treibmittel kommen in Betracht Wasser, Ammoniumbicarbonat, Natriumbicarbonat oder organische Treibmittel, wie beispielsweise Sulfohydrazide (1,3-Benzoldisulfohydrazid) oder Azodicarbonamide (Azobisformamid), 5-Morpholyl-1,2,3,4-thiatriazol.

Es können sowohl offenporige Schäume als auch solche mit geschlossen Poren hergestellt werden. Durch das Aufschäumen wird die Wasserquellbarkeit weiter verbessert.

In aufgeschäumtem Zustand weist die erfindungsgemäße Zusammensetzung eine spezifische Dichte im Bereich von 0,01 g/cm$^3$ bis 1,5 g/cm$^3$ auf. Bei Mitverwendung von Füllstoffen, insbesondere bei hohen Gehalten, liegt die spezifische Dichte in der Regel höher als bei geringerem Füllstoffgehalt.

Die Volumenquellung bei Einwirkung von Wasser auf vorgeformte Dichtungen als Prüfkörper wird wie folgend ausgeführt.

Ein Prüfkörper mit z.B. einer Länge von 5 cm wird in 500 ml Wasser pH 7 und 10° dt. Härte in einem 600 ml-Becherglas so gelegt, daß es vollständig mit Wasser bedeckt ist und bei 23°C quellen gelassen. Dann wird der Prüfkörper in bestimmten Zeitabständen dem Quellwasser entnommen, anhaftendes Wasser mit einem Filterpapier entfernt und innerhalb 1 Minute in einem teilweise mit Wasser aufgefüllten Meßzylinder die Volumenzunahme beim Eintauchen des Quellbandes gemessen (z.B. wird ein Prüfkörper mit 10 ccm Volumen (5 cm x 1 cm x 2 cm) in einen 100 ml Meßzylinder, in welchen 50 ml Wasser gefüllt wurden, eingetaucht). Anschließend wird der Prüfkörper erneut zur weiteren Quellung in das Wasser 10° dt. Härte gelegt.

Volumenquellung ist dann die relative prozentuale Volumenzunahme nach

$$\frac{\text{Volumen nach Quellung - Volumen vor Quellung}}{\text{Volumen vor Quellung}} \times 100 \text{ in \%}$$

Das Volumen vor der Quellung kann bei eindeutiger Geometrie berechnet werden oder aber ebenfalls durch die Volumenzunahme bei Eintauchen in Wasser bestimmt werden, wobei der Eintauchvorgang und das Ablesen innerhalb 20 Sekunden beendet sind.

Vorgeformte Dichtungen aus den erfindungsgemäßen Dichtungszusammensetzungen weisen bei Einwirkung von Wasser für 3 bis 7 Tage eine Volumenzunahme von 5-600 Vol.% auf.

Als geringer quellbare Dichtungen werden für die Erfindung solche angesehen, die bei Einwirkung von Wasser für 3-7 Tage eine Volumenzunahme von 5-30 Vol.%, vorzugsweise 10-20 Vol.%, aufweisen.

Als stärker quellbare Dichtungen gelten solche mit einer Volumenzunahme bei Einwirkung von Wasser für 3-7 Tage von über 50 Vol.% bis 500 Vol.%. Um den Quellungsbeginn bei Wassereinwirkung auf vorgeformte Dichtungen zu verzögern, kann ein Überzugsfilm, der gegenüber Wasser mit im wesentlichen neutralem pH-Wert relativ beständig und/oder wasserundurchlässig ist, auf mindestens einem Teil der Oberfläche der vorgeformten Dichtung aufgebracht sein.

Als im wesentlichen neutraler pH-Wert, bei dem der Überzugsfilm wasserbeständig/wasserundurchlässig ist, wird für die Erfindung der Bereich von pH 5 bis 9 angesehen und nicht nur der pH von 7. Bei Kontakt mit Wasser im alkalischen Bereich, d.h. mit pH über 9 ist der Überzugsfilm wasserdurchlässig.

Die relative Beständigkeit gegenüber Wasser bzw. Wasserundurchlässigkeit kann durch die Dicke der Überzugsschicht eingestellt werden. Die Schicht ist in der Regel 5 µm bis 500 µm dick, vorzugsweise 20 µm bis 300 µm.

Der Überzugsfilm weist eine Matrix aus einem weitgehend wasserunlöslichen filmbildenden Polymer auf, in die teilchenförmiges alkalilösliches Material eingebettet ist. Besonders bevorzugt ist es, die Matrix aus den gleichen Elastomerkomponenten auszubilden, wie die erfindungsgemäßen Dichtungszusammensetzungen. Als alkalilösliches Material kommen in Betracht schwach saure Polymere, wie Copolymere von niederen Olefinen oder Styrol mit Maleinsäureanhydrid, Poly(acrylsäure) oder Poly(methacrylsäure), Poly(acrylsäureester) oder Poly(methacrylsäureester) oder alkalilösliche anorganische Stoffe, wie Aluminiumphosphate, basische Zinkcarbonate, Metallpulver von amphoteren Metallen, wie Aluminium.

Der Überzugsfilm kann auf verschiedene Weise aufgebracht werden. Beispielsweise durch Beschichten mit einer Lösung oder Dispersion der Bestandteile der Oberfläche der vorgeformten Dichtung.

Bei einer Ausführungsform der Erfindung werden vorgeformte Dichtungen als Verbunddichtungen mit mindestens zwei oder mehreren Teilen mit unterschiedlichem Wasserquellvermögen ausgebildet.

Je nach Form der vorgeformten Dichtung als Band, Rundschnur, endlosem Profil können die Teile als mehrere parallele Schichten oder als mehr oder weniger ein Teil umhüllende Schicht ausgebildet sein. Im Falle von Profilen können ein oder mehrere in die Profiloberfläche eingebettete, Teile ein anderes Quellvermögen aufweisen als der Hauptteil des Profils.

In der Regel werden bei dieser Ausführungsform von Verbunddichtungen Teile mit geringerem Quellvermögen mit Teilen mit stärkerem Quellvermögen kombiniert.

Um die Quellung bei Wassereinwirkung zeitlich zu verzögern, ist es beispielsweise auch möglich, einen Kern der Verbunddichtung aus einer stärker quellbaren Dichtungszusammensetzung auszubilden und diesen zumindest teilweise oder vollständig mit einer Schicht aus einer geringer quellbaren Dichtungszusammensetzung zu umhüllen.

Wird eine weniger stark quellende Schicht auf der Außenseite einer vorgeformten Dichtung angebracht, so ist die Geschwindigkeit der Quellung zu Beginn klein und steigt dann erst allmählich an. Dies ist in der Praxis erwünscht, damit nicht die vorgeformte Dichtung beim Einbau durch z.B. Regenkontakt bereits stark aufquillt, also einen Teil seines Quellvermögens verliert, und dann das bereits vorgequollene Dichtungsmaterial bei Wasserkontakt ein nur noch stark reduziertes Quellvermögen aufweist oder an der eingebauten Stelle eintrocknet und damit schrumpft und dann zunächst die Dichtwirkung verloren ist.

Es ist aber auch möglich ein Verbunddichtungsprofil mit einem Kernstrang auszubilden, der ein geringeres Quellvermögen aufweist als ein diesen zumindest teilweise umfassender Außenstrang aus einer Dichtungszusammensetzung mit starkem Quellvermögen.

Das Quellvermögen der Dichtungszusammensetzungen kann durch Variation der für die Quellung verantwortlichen, obigen Parameter eingestellt werden: Anteil an ausgewählten Polysaccharid(en), Anteil an synthetischen Polymeren, Grad des Aufschäumens bzw. der Dichte und Porosität des Materials, des Vernetzungsgrades sowie der Härte.

Beispiele für die Einstellung des Quellvermögens sind in der nachfolgenden Tabelle angegeben:

| Material | Kautschuk mischung aus Beisp.1 | Super-absorber Cabloc C 96 | Stärke | Dichte g/ccm der vorgeformten Dichtung | Quellgrad (Volumen) % |
|---|---|---|---|---|---|
| weniger stark quellend | 50 | 10 | 35 | > 1, nicht geschäumt | < 10 (5)* |
| weniger stark quellend | 35 | 2,5 | 62,5 | 0,66 | < 25(20)* |
| weniger stark quellend | 50 | 5 | 45 | 0,54 | < 30(25)* |
| stärker quellend | 50 | 15 | 35 | 0,52 | >100(120)* |
| stärker quellend (400) | 35 | 15 | 50 | 0,57 | > 300(400)* |
| Quellgrad: Werte nach 3-7 Tagen erreicht; Volumenquellung in Wasser pH 7 und 10° dt. Härte bei 23°C, Prüfkörper 5 cm x 2 cm x 2 cm. | | | | | |

*) Quellgrad nach 5 Tagen.

Eine ganz bevorzugte Dichtungszusammensetzung ist eine Mischung aus Naturkautschuk, Stärke und Superabsorber, sie wird durch Erwärmen mittels des im Material befindlichen Wassers oder durch ein zugesetztes Treibmittel aufgeschäumt und anschließend ausvulkanisiert. Das geschäumte Elastomer, ein moosgummiartiges Material, hat infolge der geringeren Dichte Vorteile bei den Anwendern, da größere Mengen auf dem Bau jetzt leichter zu handhaben und zu verlegen sind. Besonders vorteilhaft ist aber, daß bei dem aufgeschäumten Material die Quellung bei ansonsten gleicher Materialzusammensetzung um ein Vielfaches höher und schneller ist.

Die erfindungsgemäße Dichtungszusammensetzung ist in allen nur denkbaren Formen, besonders in Form von Bändern, Folien, Umhüllungen oder Profilen beliebiger Geometrie herstellbar. Je nach Anwendungszweck können beispielsweise Bänder zur Fugenabdichtung oder Folien zur Außenabdichtung von Gebäuden hergestellt werden.

Für vorgeformte Dichtungen kann die Formgebung mittels Walzenkalander oder Extruder mit Breitschlitzdüse oder Runddüse oder Profildüse mit anschließender Kalibrierung oder Spritzgießen oder Formpressen erfolgen.

Die Dichtungszusammensetzung enthält ein Treibmittel, sie wird bei der Formgebung durch Erwärmen auf 100°C oder höher aufgeschäumt und Kautschuk und/oder Elastomer vulkanisiert oder vernetzt, so daß die spezifische Dichte im Bereich von 0.01 g/cm$^3$ bis 1,5 g/cm$^3$ liegt.

Im Falle von vorgeformten Verbunddichtungen mit mindestens zwei oder mehreren Teilen mit unterschiedlichem Wasserquellvermögen werden die Dichtungszusammensetzungen mit unterschiedlichem Wasserquellvermögen gemeinsam oder nacheinander ausgeformt, gemeinsam beispielsweise durch Co-Extrudieren. Es können aber auch andere zum gemeinsamen Ausformen geeignete Formgebungsverfahren eingesetzt werden.

Bei einer Ausführungsform von vorgeformten Verbunddichtungen unterscheidet sich das Wasserquellvermögen der Dichtungszusammensetzung dadurch, daß Dichtungszusammensetzungen mit Volumenzunahme von 5-30 Vol.% und mit Volumenzunahme von 50-500 Vol.% bei Einwirkung von Wasser für 3-7 Tage verwendet werden.

Ausführungsbeispiele

Beispiel 1:

a) Mischungsherstellung

Auf einem Laborwalzwerk, Hersteller: Schwabenthan, Berlin, wurde die Kautschukmischung für das Dichtungsmaterial hergestellt, wobei das Verhältnis der Drehzahlen von hinterer zu vorderer Walze (Friktion) ca. 1,2 betrug. Die vordere Walze drehte mit ca. 12 U/Min.; Walzentemperatur: 60 °C, Mastifikationszeit: 5 - 30 Min.

100 Teile Naturkautschuk (SMR, Uniroyal Aachen) wurde bei einer Walzenbreite von ca. 3 mm auf die Walze gegeben. Der Walzenspalt wurde so lange verengt, bis ein zusammenhängendes Fell um die vordere Walze läuft. Zum beschleunigten Mastifizieren wurde der Kautschuk wiederholt mit einem Messer eingeschnitten. Die Mastifikation baute den Kautschuk ab und brachte damit die notwendige Konsistenz.

Nach der Mastifikation wurden 1,5 Teile Zinkoxid (aktiv), 2,5 Teile Schwefel (90 % kristallin). 0,1 Teile Dibenzothiozyldisulfid (Vulkazit DM, Bayer AG, Leverkusen), 1,2 Teile Zink-Diethyldithiocarbamat (Vulkazit LDA, Bayer AG, Leverkusen), 0,4 Teile Tetramethylthiuramdisulfid (Vulkazit Thiuram, Bayer AG, Leverkusen), 1 Teil Stearinsäure und 5 Teile Porofor TSH (Schaumbildner, Bayer AG, Leverkusen) eingemischt.

Anschließend werden zu 50 Teilen dieser Kautschukmischung 35 Teile Kartoffelstärke (Fa. Müllers Mühle) und 15 Teile Superabsorber (Cabloc C96, Fa. Stockhausen, Krefeld), die vorher vermischt wurden, in Portionen eingemischt, wobei jeweils abgewartet wurde, bis die jeweilige Kartoffelstärke-Superabsorber-Menge vom Kautschuk aufgenommen war. Das Fell wird bei einem Walzenspalt von 3 mm abgezogen.

b) Schäumen, Formen Vernetzen

Ca. 120 g der so gewonnenen Felle werden ca. 1 - 1,5 cm breite Streifen geschnitten. Diese werden aufeinandergedrückt und in eine ca. 50 cm lange Schiene mit einem Innenquerschnitt von 2 cm X 2 cm eingelegt. Die Form wird verschlossen und für 30 Min. bei 100 °C in den Ofen gelegt. Danach wird der Ofen auf 160°C (Dauer ca. 20 Min.) aufgeheizt. Nach erreichen der Temperatur wird die Form aus dem Ofen genommen, kurz ausgekühlt und das Band aus der Form entnommen. Die so gewonnenen Abdichtbänder weisen eine Rohdichte von 0,5 bis 0,7 g/cm$^3$ auf.

Beispiel 2

Die nach Beispiel la) gewonnenen Felle werden in einen Extruder Fa. Brabender, Duisburg) eingeführt, wobei sämtliche Heizzonen und die Düse auf 80°C eingestellt sind. Die Düse hatte einen Durchmesser von 3 mm, der Zylinder von 2,1 cm. Die Schnecke wurde mit 50 U/min gedreht. Das wurstförmige Extrudat wurde im Ofen für 30 Min. bei 100°C geschäumt und anschließend bei 160°C vulkanisiert.

Beispiel 3

Analog Beispiel 1 wurden unter teilweiser Substitution oder Erhöhung des Stärkeanteils Dichtungszusammensetzungen mit unterschiedlichen Anteilen, an Superabsorber (5 bis 20 Teile) hergestellt.

Bei der Untersuchung des Quellverhaltens wurde festgestellt, daß ein Dichtungsmaterial mit 15 und 20 % Superabsorber nach 3 Tagen ein Quellvermögen von 50 Vol.% aufwies, während eine Dichtungszusammensetzung mit 10 Teilen Superabsorber nur 20 Vol.% quoll und eine Dichtungszusammensetzung mit 5 Teilen Superabsorber nur 10 Vol.% quoll.

Somit ist festzuhalten, daß die Menge an Superabsorber einen außerordentlich großen Einfluß auf die Quellfähigkeit der Dichtungszusammensetzung aufweist.

Vergleichsbeispiel 1

Analog Beispiel 1 wurde eine Dichtungszusammensetzung ohne Stärke mit 15 Teilen Superabsorber hergestellt.

Bei der Untersuchung des Queliverhaltens konnte festgestellt werden, daß das Dichtungsmaterial ohne Stärke nach 3 Tagen ein Quellvermögen von ca. 1 Vol.% aufweist, während das Dichtungsmaterial von Beispiel 1 mit 15 Teilen Superabsorber und 35 Teilen Kartoffelstärke nach 3 Tagen ein Quellvermögen von 50 Vol.% aufwies.

Somit ist festzuhalten, daB die Kombination von Polysaccharid mit für Wasser hochsaugaktivem synthetischem Polymer wesentlich ist für die Quellfähigkeit der Dichtungen.

Beispiel 4

Analog Beispiel 1 wurden Walzenfelle, jetzt 100 Teile Naturkautschuk, 5 Teile Zinkoxid (aktiv), 1 Teil Antioxidant WSL, 1 Teil Stearinsäure, 3 Teile Schwefel (90 % kristallin), 1,5 Teile Vulkazit D (Bayer AG, Leverkusen) auf dem Malzwerk bei 40°C hergestellt. Zu 50 Teilen dieser Kautschukmischung wurden dann auf dem Walzwerk 40 Teile Kartoffelstärke, 5 Teile Superabsorber Favor SAB und 5 Teile Natriumhydrogencarbonat eingemischt.

Diese Walzenfelle zeigen ungeschäumt und unvulkanisiert auch nach 11 Tagen nur eine Massenquellung von 20 %. Die Rohdichte lag bei ca. 1,04 g/cm$^3$. Die aufgeschäumten Proben mit Rohdichten von ca. 0,5 bis 0,6 g/cm$^3$ zeigen dagegen nach 7 Tagen bereits eine Massenquellung von 500 %.

Somit ist festzuhalten, daß das Aufschäumen bzw. die Rohdichte des Abdichtmaterials einen entscheidenden Einfluß auf die Quellfähigkeit der Zusammensetzungen hat.

Beispiel 5

Wird das geschäumte Material aus Beispiel 4 ausvulkanisiert bei 160°C. so liegt die Massenquellung nach 7 Tagen bei 300 %.

Somit ist festzuhalten, daß die Vulkanisation oder Vernetzung der Kautschuk/Elastomerkomponente einen wichtigen Einfluß auf die Quellfähigkeit des Materials hat.

Beispiel 6

Analog Beispiel 4 wurde eine Dichtungszusammensetzung hergestellt, jetzt allerdings mit einem feinteiligeren Superabsorber Typ: Favor CA100 Feinstkorn, Fa. Stockhausen. Krefeld.

Bei der Untersuchung des Quellverhaltens ist bei Verwendung des feinteiligeren Superabsorbers das Herausplatzen bzw. Herausquellen des Superabsorbers per Augenschein deutlich minimiert, auf der Bandoberfläche ist nach dem Quellen kein Superabsorber mehr zu sehen. Die ausgewaschenen Bestandteile liegen bei Verwendung des grobteiligen Superabsorbers bei 3.5 Massen-%, bei Verwendung des feinteiligeren bei 2,9 Massen-%.

Somit ist festzuhalten, daß die Korngröße des Superabsorbers einen wichtigen Einfluß darauf hat, ob er bei dem Quelivorgang im Material festgehalten wird oder mehr oder weniger ausgeschwemmt wird.

Beispiel 7

Analog Beispiel 2 wurden Dichtungszusammensetzungen hergestellt, die keinen Superabsorber enthielten, dafür jedoch quellfähiges Alginat. In 50 Teile der Kautschukmischung nach Beispiel 1 wurden mit 10 Teilen Alginat und 40 Teilen Kartoffelstärke. 15 Teile Alginat und 35 Teile Kartoffelstärke sowie 20 Teile Alginat und 30 Teile Kartoffelstärke eingemischt.

Bei der Untersuchung des Quellverhaltens konnte festgestellt werden, daß mit 20 Teilen Alginat eine Volumenquellung von 60 % erreicht wurde. Allerdings werden dabei 10 Massenprozent des Abdichtmaterials ausgeschwemmt und bei der Wiederquellung nur noch 50 Volumenprozent erreicht.

Somit ist festzuhalten, daß offensichtlich für eine gute Einbindung in die Elastomermatrix eine gewisse Partikelgröße, die wiederum nach Beispiel 6 nicht zu groß sein darf, sowie Unlöslichkeit in Wasser vonnöten ist, da das wasserlösliche Alginat ausgeschwemmt werden kann.

**Patentansprüche**

1. Wasserquellende Dichtungszusammensetzung für vorgeformte Dichtungen mit einer Matrix aus Elastomerkomponente(n) und darin eingelagertem teilchenförimigen wasseraufnehmenden Material, das eine Kombination von (A) (Polysaccharid(en), ausgewählt aus mikrokristalliner oder amorpher Cellulose, Stärke, Stärkederivaten ausgenommen gepfropfter Stärke, Amylose, Amylopektin, Dextrane, Pektine, Inulin, Chitin, Xanthan, Alginsäure, Alginaten, Caragenaan, Pustulan, Callose, Laminarin, Guluronsäure, Pullulan, Lichenin oder Mischungen derselben mit (B) für Wasser hochsaugaktivem synthetischen Polymer, ausgewählt aus Polymeren auf (Meth)acrylatbasis, Poly(meth)acrylsäure und deren Salzen, Polyacrylamid, Polyalkoholen oder Copolymeren der genannten synthetischen Polymeren ist und die Dichtungszusammensetzung mittels eines Treibmittels und Erwärmen auf 100°C oder höher aufgeschäumt und die Elastomerkomponente(n) vernetzt ist (sind).

2. Wasserquellende Zusammensetzung nach Anspruch 1, dadurch gekennzeichnet, daß sie auf 100 Gew.Tl. Elastomerkomponente(n), 6,67 Gew.Tl. bis 600 Gew.Tl. Polysaccharid(e) (A) und 2,67 Gew.Tl. bis 100 Gew.Tl. synthetisches Polymer (B) enthält.

3. Dichtungszusammensetzung nach einem der vorstehenden Ansprüche, dadurch gekennzeichnet, daß die Elastomerkomponente(n) ausgewählt ist (sind) aus vulkanisiertem Naturkautschuk (NR), vulkanisiertem cis-1,4-Poly-isoprenkautschuk (IR), vulkanisiertem Polybutadien (BR), vulkanisierten statistisch copolymerisierten Styrol-Dienkautschuken (SBR oder SIR), vulkanisiertem Acrylatkautschuk, vulkanisierten Acrylnitril-Dienkautschuken (NBR oder NIR), vulkanisiertem Polychloropren (CR), vulkanisiertem Ethylen-Propylenkautschuk (EPR), vulkanisierten Isobutylen-Isoprenkautschuken (IIR), vulkanisiertem Ethylen-Propylen-Dienkautschuk (EPDM), vulkanisiertem Epichlorhydrin-Kautschuk, vulkanisiertem Siliconkautschuk, vulkanisiertem Polysulfidkautschuk, vernetzten Polyurethanen, vernetzten thermoplastischen Elastomeren.

4. Dichtungszusammensetzung nach einem der vorstehenden Ansprüche 1-3. dadurch gekennzeichnet, daß das für Wasser hochsaugaktive synthetische Polymer eine mittlere Korngröße im Bereich von 5 µm bis 800 µm aufweist.

5. Dichtungszusammensetzung nach einem der Ansprüche 1-4, dadurch gekennzeichnet, daß sie ein oder mehrere übliche Additive, ausgewählt aus Gleitmittel, Alterungsschutzmittel, Farbstoffe und Füllstoffe, Treibmittel, Weichmacher, Vernetzungsmittel, Vernetzungsbeschleuniger, Aktivatoren, Verzögerer enthält.

6. Dichtungszusammensetzung nach einem der Ansprüche 1-5, dadurch gekennzeichnet, daß sie eine spezifische Dichte im Bereich von 0,01 g/cm$^3$ bis 1,5 g/cm$^3$ aufweist.

7. Dichtungszusammensetzung nach Anspruch 6, dadurch gekennzeichnet, daß sie bei Einwirkung von Wasser für 3 bis 7 Tage eine Volumenzunahme von 5-600 Vol.% aufweist.

8. Dichtungszusammensetzung nach Anspruch 7, dadurch gekennzeichnet, daß sie bei Einwirkung von Wasser für 3-7 Tage eine Volumenzunahme von 5-30 Vol.% aufweist.

9. Dichtungszusammensetzung nach Anspruch 7, dadurch gekennzeichnet, daß sie bei Einwirkung von Wasser für 3-7 Tage eine Volumenzunahme von 10-20 Vol.%, aufweist.

10. Dichtungszusammensetzung nach Anspruch 7, dadurch gekennzeichnet, daß sie bei Einwirkung von Wasser für 3-7 Tage eine Volumenzunahme von über 50 Vol.% bis zu 500 Vol.% aufweist.

11. Dichtungszusammensetzung nach einem der Ansprüche 1-10, dadurch gekennzeichnet, daß sie zu Bändern, Rundschnüren, endlosen Profilen vorgeformt ist.

12. Dichtungszusammensetzung nach Anspruch 11, dadurch gekennzeichnet, daß die vorgeformten Dichtungen als Verbunddichtungen mit mindestens zwei oder mehreren Teilen mit unterschiedlichem Wasserquellvermögen ausgebildet sind.

13. Dichtungszusammensetzung nach Anspruch 12, dadurch gekennzeichnet, daß die Verbunddichtung ein oder mehrere Teile mit Volumenzunahme von 5-30 Vol.% und ein oder mehrere Teile mit Volumenzunahme von über 50 Vol.% bis 500 Vol.% bei Einwirkung von Wasser für 3-7 Tage aufweist.

14. Dichtungszusammensetzung nach einem der Ansprüche 11-13, dadurch gekennzeichnet, daß das Quellen unter Wassereinwirkung von vorgeformten Dichtungen/Verbunddichtungen durch einen Überzugsfilm, der gegenüber Wasser mit im wesentlichen neutralem pH-Wert relativ beständig und/oder undurchlässig ist, jedoch gegenüber Wasser bei einem alkalischen pH-Wert unbeständig und wasserdurchlässig ist, auf mindestens einem Teil der Oberfläche der vorgeformten Dichtungen/Verbunddichtungen erheblich verzögert ist.

15. Verfahren zum Herstellen von vorgeformten, unter Einwirkung von wasserquellenden Dichtungen aus Dichtungszusammensetzungen mit einer Matrix aus Elastomerkomponente(n) und darin eingelagertem teilchenförmigen wasseraufnehmenden Material nach einem der Ansprüche 1-10, durch Mischen der Bestandteile auf einem Mischwalzwerk, in einem Innenmischer oder Extruder und anschließendes Ausformen, wobei mittels eines Treibmittels und Erwärmen auf 100°C oder höher die Dichtungszusammensetzung aufgeschäumt und die vernetzte Elastomerkomponente(n) gebildet wird (werden), so daß die Volumenzunahme bei Einwirkung von Wasser für 3-7 Tage 5-600 Vo1.% beträgt.

16. Verfahren nach Anspruch 15, dadurch gekennzeichnet, daß die Formgebung mittels walzenkalander oder Extruder mit Breitschlitzdüse oder Runddüse oder Profildüse mit anschließender Kalibrierung oder Spritzgießen oder Formpressen erfolgt.

17. Verfahren nach Anspruch 15 oder 16, dadurch gekennzeichnet, daß die aufgeschäumte Dichtungszusammensetzung eine spezifische Dichte im Bereich von 0,01 g/cm$^3$ bis 1,5 g/cm$^3$ aufweist.

18. Verfahren nach einem der Ansprüche 15-17, dadurch gekennzeichnet, daß eine vorgeformte Verbunddichtung mit mindestens zwei oder mehreren Teilen mit unterschiedlichem Wasserquellvermögen durch gemeinsames Ausformen von Dichtungszusammensetzungen mit Volumenzunahme von 5-30 Vol.% und mit Volumenzunahme von 50-500 Vol.% bei Einwirkung von Wasser für 3-7 Tage ausgebildet wird.

19. Verfahren zum Herstellen von vorgeformten, unter Einwirkung von Wasser quellenden Dichtungen nach einem der Ansprüche 15-18, gekennzeichnet durch Aufbringen auf mindestens einen Teil der Oberfläche der vorgeformten Dichtungen/Verbunddichtungen eines Überzugsfilmes, der gegenüber Wasser mit im wesentlichen neutralen pH-Wert relativ beständig und/oder undurchlässig ist, jedoch gegenüber Wasser bei einem alkalischen pH-Wert unbeständig und wasserdurchlässig ist, um das Quellen bei Wassereinwirkung erheblich zu verzögern.

20. Verwendung der Dichtungszusammensetzung nach einem der Ansprüche 1-14 und/oder nach dem Verfahren der Ansprüche 15-19 erhaltenen zur Abdichtung von Bauwerken im Hoch-, Tief- oder Tunnelbau.

**Claims**

1. A water-swellable seal composition for preformed seals comprising a matrix of elastomer component(s) and embedded particulate water-absorbent material(s) that is a combination of
(A) polysaccharide(s) selected from microcrystalline or amorphous cellulose, starch, starch derivatives except grafted starch, amylose, amylopectin, dextrans, pectins, insulin, chitin, xanthan, alginic acid, alginates, carragheenan, pustulan, callose, laminarin, guluronic acid, pullulan, lichenin or mixtures thereof with (B) water-superabsorbent synthetic polymer selected from polymers based on (meth)acrylate, poly(meth)-acrylic acid and salts thereof, polyacrylamide, polyalcohols or copolymers thereof, and the seal composition is foamed by means of a blowing agent and heating to 100°C or higher and the elastomer component(s) is (are) crosslinked.

2. A water-swellable composition according to claim 1, characterized in that it includes 6.67 parts by weight to 600 parts by weight of polysaccharide(s) (A) and 2.67 parts by weight to 100 parts by weight of synthetic polymer (B) per 100 parts by weight of elastomer component(s).

3. A seal composition according to one of the preceding claims, characterized in that the elastomer component(s) is (are) selected from vulcanized natural rubber (NR), vulcanized cis-1,4-polyisoprene rubber (IR), vulcanized polybutadiene (BR), vulcanized randomly copolymerized styrene-butadiene rubbers (SBR or SIR), vulcanized acrylate rubber, vulcanized acrylonitrile-diene rubbers (NBR or NIR), vulcanized polychloroprene (CR), vulcanized ethylene-propylene rubber (EPR), vulcanized isobutylene-isoprene rubbers (IIR), vulcanized ethylene-propylene-diene rubber (EPDM), vulcanized Epichlorhydrin rubber, vulcanized silicone rubber, vulcanized polysulfide rubber, crosslinked polyurethanes, crosslinked thermoplastic elastomers.

4. A seal composition according one of the preceding claims, characterized in that the water-superabsorbent synthetic polymer has an average particle size in the range from 5 μm to 800 μm.

5. A seal composition according to any of claims 1 to 4, characterized in that it includes one or more customary additives selected from lubricants, aging inhibitors, dyes, fillers, blowing agents, plasticizers, crosslinking agents, crosslinking accelerants, activators, retarders.

6. A seal composition according to any of claims 1 to 5, characterized in that it has a specific density in the range from 0.01 g/cm$^3$ to 1.5 g/cm$^3$.

7. A seal composition according to claim 6, characterized in that-its volume increases by 5-600% by volume on exposure to water for 3 to 7 days.

8. A seal composition according to claim 7, characterized in that its volume increases by 5-30% by volume, preferably 10-20% by volume, on exposure to water for 3-7 days.

9. A seal composition according to claim 7, characterized in that its volume increases by 10-20% by volume, on exposure to water for 3-7 days.

10. A seal composition according to claim 7, characterized in that its volume increases by more than 50% by volume to 500% by volume on exposure to water for 3-7 days.

11. A seal composition according to any of claims 1 to 10, characterized in that it is preformed into tapes, round cords, endless profiles.

12. A seal composition according to claim 11, characterized in that the preformed seals are constructed as composite seals combining at least two or more parts having different water swellabilities.

13. A seal composition according to claim 12, characterized in that the composite seal comprises one or more parts with a volume increase of 5-30% by weight and one or more parts with a volume increase of more than 50% by volume to 500% by volume on exposure to water for 3-7 days.

14. A seal composition according to any of claims 1 to 13, characterized in that the swelling of preformed seals under the action of water is appreciably retarded on at least part of the surface of the preformed seals by an overcoating film which is relatively stable and/or impervious with regard to water having a substantially neutral pH, but unstable and water-pervious with regard to water at an alkaline pH.

15. A process for producing preformed seals which swell under the action of water, from seal compositions comprising a matrix of elastomer component(s) and embedded particulate water-absorbent material(s) according to any of claims 1 to 10,
by mixing the constituents and a blowing agent on mixing rolls, or in an internal mixer or extruder and then forming the seal wherein during the forming the seal composition being foamed by means of the blowing agent and heating to 100°C or higher crosslink the elastomer component(s) so that the volume increase on exposure to water for 3-7 days is 5-600% by volume.

16. The process according to claim 15, characterized in that the forming is effected using a roll calendar or an extruder equipped with a slot die or a round-section die or a profile die with subsequent calibration or injection molding or compression molding.

17. The process according to claims 15 or 16, characterized in that the foamed seal composition has a specific density in the range from 0.01 g/cm$^3$ to 1.5 g/cm$^3$.

18. The process according to any of claims 15 to 17, characterized in that the preformed composite seal combining at least two or more parts having different water swellabilities is formed by coforming seal compositions having a volume increase of 5-30% by volume and a volume increase of 50-500% by volume on exposure to water for 3-7 days.

19. The process for producing preformed seals which swell under the action of water, according any of claims 15 to 18, characterized by an overcoating film is applied to at least part of the surface of the preformed seals, which overcoating film is relatively stable and/or impervious with regard to water having a substantially neutral pH, but unstable and water-pervious with regard to water at an alkaline pH in order that the swelling on exposure to water may be substantially retarded.

20. Use of the seal composition according to any of claims 1 to 14 and/or obtained by the process according to any of claims 15 to 19 for sealing constructions, in structural, civil or tunnel engineering.

**Revendications**

1. Composition de garniture d'étanchéité gonflant au contact de l'eau, pour des garnitures d'étanchéité préformées, comportant une matrice à base de composant(s) élastomère(s) et, incorporé dans celle-ci, un matériau particulaire absorbant l'eau, qui est une association de (A) polysaccharide(s) choisi(s) parmi la cellulose microcristalline ou amorphe, l'amidon, des dérivés d'amidon à l'exception de l'amidon greffé, l'amylose, l'amylopeptine, les dextranes, les pectines, l'inuline, la chitine, le xanthane, l'acide alginique, les alginates, le carraghénane, le pustulane, le callose, la laminarine, l'acide guluronique, le pullulane, la lichénine ou des mélanges de ceux-ci, avec (B) un polymère synthétique absorbant fortement l'eau, choisi parmi les polymères à base de (méth) acrylate, le poly [acide (méth)acrylique] et ses sels, le polyacrylamide, des polyalcools ou des copolymères des polymères synthétiques cités, la composition de garniture d'étanchéité étant expansée au moyen d'un agent d'expansion et d'un chauffage à 100°c ou plus, le(s) composant(s) élastomère(s) étant réticulé(s).

2. Composition gonflant au contact de l'eau selon la revendication 1, caractérisée en ce qu'elle contient, pour 100 parties en poids de composant(s) élastomère(s), de 6,67 à 600 parties en poids de polysaccharide(s) (A) et de 2,67 à 100 parties en poids de polymère synthétique (B).

3. Composition de garniture d'étanchéité selon l'une des revendications précédentes, caractérisée en ce que le(s) composant(s) élastomère(s) est(sont) choisi(s) parmi le caoutchouc naturel vulcanisé (NR), le caoutchouc cis-1,4-polyisoprène vulcanisé (IR), le polybutadiène vulcanisé (BR), les caoutchoucs styrène-diène copolymérisés statistiquement et vulcanisés (SBR ou SIR), le caoutchouc acrylate vulcanisé, les caoutchoucs acrylonitrile-diène vulcanisés (NBR ou NIR), le polychloroprène vulcanisé (CR), le caoutchouc éthylène-propylène vulcanisé (EPR), les caoutchoucs isobutylène-isoprène vulcanisés (IIR), le caoutchouc éthylène-propylène-diène vulcanisé (EPDM), le caoutchouc d'épichlorhydrine vulcanisé, le caoutchouc silicone vulcanisé, le caoutchouc polysulfure vulcanisé, les polyuréthannes réticulés, les élastomères thermoplastiques réticulés.

**4.** Composition de garniture d'étanchéité selon l'une quelconque des revendications 1 à 3 précédentes, caractérisée en ce que le polymère synthétique hautement absorbant pour l'eau présente une taille moyenne de particules dans la plage de 5 μm à 800 μm.

**5.** Composition de garniture d'étanchéité selon l'une quelconque des revendications 1 à 4, caractérisée en ce qu'elle contient un ou plusieurs additifs usuels, choisis parmi des lubrifiants, agents de protection contre le vieillissement, colorants et charges, agents d'expansion, plastifiants, agents de réticulation, accélérateurs de réticulation, activateurs, ralentisseurs.

**6.** Composition de garniture d'étanchéité selon l'une quelconque des revendications 1 à 5, caractérisée en ce qu'elle présente une densité spécifique dans la plage de 0,01 g/cm$^3$ à 1,5 g/cm$^3$.

**7.** Composition de garniture d'étanchéité selon la revendication 6, caractérisée en ce qu'elle présente, sous l'effet de l'eau pendant 3 à 7 jours, une augmentation de volume de 5 à 600 % en volume.

**8.** Composition de garniture d'étanchéité selon la revendication 7, caractérisée en ce qu'elle présente, sous l'effet de l'eau pendant 3-7 jours, une augmentation de volume de 5-30 % en volume.

**9.** Composition de garniture d'étanchéité selon la revendication 7, caractérisée en ce qu'elle présente, sous l'effet de l'eau pendant 3-7 jours, une augmentation de volume de 10-20 % en volume.

**10.** Composition de garniture d'étanchéité selon la revendication 7, caractérisée en ce qu'elle présente, sous l'effet de l'eau pendant 3-7 jours, une augmentation de volume de plus de 50 % en volume à 500 % en volume.

**11.** Composition de garniture d'étanchéité selon l'une quelconque des revendications 1 à 10, caractérisée en ce qu'elle est préformée en bandes, joints toriques, profilés continus.

**12.** Composition de garniture d'étanchéité selon la revendication 11, caractérisée en ce que les garnitures d'étanchéité préformées sont produites sous forme de garnitures d'étanchéité composites comportant au moins deux ou plus de deux parties à différents pouvoirs de gonflement au contact de l'eau.

**13.** Composition de garniture d'étanchéité selon la revendication 12, caractérisée en ce que la garniture d'étanchéité composite présente une ou plusieurs parties à augmentation de volume de 5-30 % en volume et une ou plusieurs parties à augmentation de volume de plus de 50 % en volume à 500 % en volume, sous l'effet de l'eau pendant 3-7 jours.

**14.** Composition de garniture d'étanchéité selon l'une quelconque des revendications 11 à 13, caractérisée en ce que le gonflement sous l'effet de l'eau de garnitures d'étanchéité/garnitures d'étanchéité composites préformées est ralenti considérablement sur au moins une partie de la surface des garnitures d'étanchéité/garnitures d'étanchéité composites préformées, par une pellicule de revêtement qui est relativement imperméable et/ou résistante à l'eau à un pH pratiquement neutre, mais est perméable à l'eau et non résistante à l'eau à un pH alcalin.

**15.** Procédé pour la production de garnitures d'étanchéité préformées, gonflant sous l'effet de l'eau, à partir de compositions de garnitures d'étanchéité comportant une matrice de composant(s) élastomère(s) et un matériau particulaire absorbant l'eau, incorporé dans celle-ci, selon l'une quelconque des revendications 1 à 10, par mélange des composants sur un broyeur à cylindres, dans un mélangeur interne ou une extrudeuse, et formage subséquent, la composition de garniture d'étanchéité étant expansée et le(s) composant(s) élastomère(s) réticulé(s) étant formé(s) à l'aide d'un agent d'expansion et par chauffage à 100°C ou plus, de sorte que l'augmentation de volume sous l'effet de l'eau pendant 3-7 jours est de 5-600 % en volume.

**16.** Procédé selon la revendication 15, caractérisé en ce que le formage s'effectue au moyen d'une calandre à cylindres ou d'une extrudeuse à filière plate ou à filière circulaire ou à filière profilée, avec calibrage ou moulage par injection ou moulage par compression subséquent.

17. Procédé selon la revendication 15 ou 16, caractérisé en ce que la composition de garniture d'étanchéité expansée présente une densité spécifique dans la plage de 0,01 g/cm$^3$ à 1,5 g/cm$^3$.

18. Procédé selon l'une quelconque des revendications 15 à 17, caractérisé en ce qu'est produite une garniture d'étanchéité composite préformée, comportant au moins deux ou plus de deux parties à différents pouvoirs de gonflement au contact de l'eau, par formage conjointement de compositions de garnitures d'étanchéité à augmentation de volume de 5-30 % en volume et à augmentation de volume de 50-500 % en volume, sous l'effet de l'eau pendant 3-7 jours.

19. Procédé pour la fabrication de garnitures d'étanchéité préformées, gonflant sous l'effet de l'eau, selon l'une des revendications 15 à 18, caractérisé par l'application, sur au moins une partie de la surface des garnitures d'étanchéité/garnitures d'étanchéité préformées, d'une pellicule de revêtement qui est relativement résistante et/ou imperméable à l'eau à pH pratiquement neutre, mais est perméable et non résistante à l'eau à un pH alcalin, pour ralentir considérablement le gonflement sous l'effet de l'eau.

20. Utilisation de la composition de garniture d'étanchéité selon l'une quelconque des revendications 1 à 14 et/ou obtenue selon le procédé des revendications 15 à 19, pour l'étanchéification d'ouvrages dans le bâtiment, les travaux publics ou la construction de tunnels.